(19) Europäisches Patentamt
European Patent Office
Office européen des brevets

(11) **EP 1 729 623 B1**

(12) **EUROPÄISCHE PATENTSCHRIFT**

(45) Veröffentlichungstag und Bekanntmachung des Hinweises auf die Patenterteilung:
**28.11.2012 Patentblatt 2012/48**

(21) Anmeldenummer: **05716231.5**

(22) Anmeldetag: **19.03.2005**

(51) Int Cl.:
***A47L 13/16*** (2006.01)

(86) Internationale Anmeldenummer:
**PCT/EP2005/002948**

(87) Internationale Veröffentlichungsnummer:
**WO 2005/092169 (06.10.2005 Gazette 2005/40)**

(54) **SCHWAMMTUCH AUF ZELLULOSEBASIS UND VERFAHREN ZUR HERSTELLUNG EINES SCHWAMMTUCHES**

CELLULOSE-BASED SPONGE CLOTH, AND METHOD FOR THE PRODUCTION OF A SPONGE CLOTH

TISSU EPONGE A BASE DE CELLULOSE ET PROCEDE DE PRODUCTION D'UN TISSU EPONGE.

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**HR**

(30) Priorität: **23.03.2004 DE 102004014056**

(43) Veröffentlichungstag der Anmeldung:
**13.12.2006 Patentblatt 2006/50**

(73) Patentinhaber: **Kalle GmbH**
**65203 Wiesbaden (DE)**

(72) Erfinder:
• **MANS, Leo**
**55120 Mainz (DE)**
• **KONZOK, Georg**
**65527 Niedernhausen (DE)**

(74) Vertreter: **Zounek, Nikolai et al**
**Plate Schweitzer Zounek**
**Patentanwälte**
**Rheingaustrasse 196**
**65203 Wiesbaden (DE)**

(56) Entgegenhaltungen:
DE-A1- 19 753 546      DE-A1- 19 910 105
US-A- 5 910 275        US-B1- 6 235 302
US-B1- 6 281 259

**Beschreibung**

Die Erfindung betrifft ein Schwammtuch auf Zellulosebasis, mit einer Innenverstärkung aus Textilfasern und ein Verfahren zur Herstellung eines Schwammtuches auf Zellulosebasis.

Im Stand der Technik werden Schwammtüchern aus Zellstoff hergestellt, der beispielsweise über das Viskoseverfahren oder mittels des NMMO-Verfahrens in flüssige Form übergeführt wird. In der flüssigen Phase werden dem Zellstoff als innere Verstärkung Textil- oder Kunststofffasern zugesetzt. Bei den Textilfasern handelt es sich beispielsweise um Hanf-, Baumwoll-, Flachsfasern. Daneben können auch Viskose- oder Alginatfasern verwendet werden.

Eine weitere Möglichkeit eine innere Verstärkung des Schwammtuches zu schaffen besteht darin, den Zellstoff in der flüssigen Phase über ein Netz aus Naturfasern, z. B. Baumwolle, oder Kunstfasern, beispielsweise Polyethylenterephthalat oder Polyamid, zu gießen. Hierbei wird das Netz von der Flüssigphase umschlossen und nach der Fällung des flüssigen Zellstoffs ist das Netz beidseitig von dem gefällten Zellstoff eingefasst, d. h. es befindet sich in der Mitte des Schwammtuches.

Es ist bekannt, die Feinheit von Textilfasern, insbesondere von Baumwollfasern, nach der sogenannten Micronaire-Methode (DIN 53 941) zu ermitteln. Bei dieser Methode wird jeweils eine Faserprobe konstanten Gewichtes hergestellt und in eine spezifische Messkammer eingebracht. In dieser Messkammer wird die Probe zusammengepresst und mit einem Luftstrom beaufschlagt. Die von der Faserprobe, d. h. den zusammengepressten Fasern durchgelassene Luftmenge oder die auftretende Luftdruckminderung wird gemessen. Je geringer die Luftdurchlässigkeit bzw. je geringer der Druckabfall ist, umso höher ist die Faserfeinheit. Die von der Luftdurchlässigkeit abhängige, auf die Faserfeinheit bzw. die Faserdicke bezogene Kennzahl ist der sogenannte Micronaire-Wert. Eine Fasernprobe von dünnen Fasern hat ein hohes Verhältnis von Oberfläche zu Masse und lässt daher nur wenig Luft durch, woraus ein niedriger Micronaire-Wert resultiert. Eine Faserprobe mit dicken Fasern hat ein niedriges Verhältnis von Oberfläche zu Masse, so dass mehr Luft hindurchströmen kann, woraus ein höherer Micronaire-Wert resultiert. Die Basis für den Micronaire-Wert liegt bei Baumwolle für Textilien im Bereich von 3,0 bis 4,9. Für technische Anwendungen der Baumwollfasern, wie deren Einsatz als Verstärkungsfasern in Schwammtüchern, können die Micronaire-Werte auch größer als 4,9 sein.

Bei Baumwolle wird die Faserlänge in Bruchteilen von 1 Zoll, nämlich als 32. Teil eines Zolls, gemessen und diesem Basiswert wird die Ziffer 34 oder 34/32 zugeordnet. Dieser Wert entspricht einer Stapelfaserlänge von 0,794 mm.

Die Bestimmung der Feinheit von Flachsfasern nach dem Micronaire-Verfahren wird gleichfalls praktiziert, wobei jedoch zu beachten ist, dass Flachsfasern im Allgemeinen inhomogener als Baumwollfasern sind und daher bei der Aufbereitung von Flachsfasern für die Micronaire-Messung darauf geachtet werden muss, dass möglichst alle Knoten aus der Flachsfaser-Probe entfernt sind.

Bekannte Schwammtücher, die zur inneren Verstärkung mit einem Netz aus Textilfasern oder Kunstfasern ausgerüstet sind, sind in ihrer Reißfestigkeit durch die Längs- und Querfestigkeit des Netzes begrenzt. Die Abriebfestigkeit derartiger Schwammtücher wird durch das zwischen den beiden Oberflächen in der Mitte des Schwammtuches befindliche Netz nicht verstärkt, da sich die Abriebfestigkeit in erster Linie von dem Polymerisationsgrad des eingesetzten Zellstoffes nach dessen Fällung bestimmt.

Erfolgt die innere Verstärkung von Schwammtüchern durch das Einbringen von Fasern, lässt sich die zugesetzte Fasermenge nicht beliebig erhöhen, um die Abrieb- und Reißfestigkeit der Schwammtücher zu steigern, ohne dass dadurch die wesentlichen, durch den Zellstoff bedingten Eigenschaften wie die Aufsaugkapazität und Aufsauggeschwindigkeit der Schwammtücher reduziert werden. Auch das Verhältnis Faserlänge zu Feinheit bzw. Dicke der Fasern lässt sich nicht beliebig erhöhen, da ab einem Verhältnis von beispielsweise Stapelfaserlänge SL 2,5 % in mm zu Faserdicke bzw. Faserfeinheit in Micronaire größer als 4 mm häufig eine Knotenbildung der Fasern auftritt, die zu einer nicht homogenen Verteilung der Fasern im Schwammtuch mit entsprechend reduzierter Festigkeit des Schwammtuches führt. Es müssen daher ab einem Verhältnis Stapelfaserlänge zu Faserfeinheit größer als 4 mm entsprechende Vorkehrungen getroffen werden, damit es noch zu einer inneren Verstärkung des Schwammtuches kommt.

Die Werte Stapelfaserlänge SL 2,5 %, SL 50 % und Micronaire werden bei einer Temperatur von 20 °C $\pm$ 2 °C und einer relativen Luftfeuchtigkeit von 65 % $\pm$ 2 % gemessen. Eine Stapelfaserlänge SL 2,5 % in mm bedeutet, dass maximal 2, 5% der Stapelfasern länger als die Stapelfaserlänge sind Eine Stapelfaserlänge SL 50 % in mm heißt, dass maximal 50 % der Stapelfasern länger als die Stapelfaserlänge sind. Des Weiteren wird auch ein Uneinheitlichkeitswert

$$UR = \frac{SL50\% \times 100\%}{SL2,5\%}$$

bestimmt. Je kleiner der Quotient aus SL 50 % und SL 2,5 % ist, desto einheitlicher sind die Stapelfaserlängen. Für zwei gängige Baumwollsorten wie rohweiße Reißbaumwolle Typ 30120306 und indische Baumwolle sind nachfolgend solche Daten und die Micronaire-Werte beispielhaft angegeben.

| | SL 50 % (mm) | SL 2,5% (mm) | UR $$\frac{SL50\%\times100\%}{SL2,5\%}$$ | Micronaire-Wert |
|---|---|---|---|---|
| rohweiße Reißbaumwolle Typ 30120306 | 9,16 | 22,26 | 41,1 | 4,6 |
| indische Baumwolle | 7,38 | 17,59 | 42,0 | 3,2 |

Aufgabe der Erfindung ist es, die Reiß- und Abriebfestigkeit von Schwammtüchern zu erhöhen, ohne deren Saugfähigkeit und Sauggeschwindigkeit zu beeinträchtigen.

Diese Aufgabe wird erfindungsgemäß durch ein Schwammtuch gemäß Anspruch 1 der eingangs beschriebenen Art in der Weise gelöst, dass das Verhältnis Stapelfaserlänge SL 2,5 % in mm zu Faserfeinheit in Micronaire im Bereich größer 4,0 bis 75 mm liegt.

Sobald das Verhältnis Stapelfaserlänge zu Faserfeinheit größer 4 mm ist, muss insbesondere darauf geachtet werden, dass es nicht zu einer Knotenbildung der Fasern kommt. Dies geschieht in der Weise, dass die Fasern in die flüssige Phase des Zellstoffes so eingebracht werden, dass eine räumliche homogene Verteilung der Fasern erreicht wird. Diese Verteilung im Zellstoff wird dann auf das Schwammtuch übertragen, um dessen Reiß- und Abriebfestigkeit zu erhöhen. In dieser Ausgestaltung der Erfindung sind die Textilfasern in der Zellulose des Schwammtuches räumlich homogen verteilt.

In Weiterbildung der Erfindung beträgt die Faserfeinheit in Micronaire 3 bis 6. Die Länge der Stapelfasern liegt zweckmäßigerweise im Bereich von 12 mm bis 30 mm. Zur Vermeidung von Knotenbildung bei Stapelfasern trägt erfindungsgemäß bei, dass die Textilfasem vorbehandelt und gleichmäßig mit verdünnter Natronlauge benetzt sind.

In Ausgestaltung der Erfindung bestehen die Textilfasern aus Baumwolle, Hanf oder Flachs. Hierzu ist anzumerken, dass für Textilfasern aus Hanf oder Flachs zur Bestimmung der Faserfeinheit gleichfalls das Micronaire-Verfahren anwendbar ist, das an und für sich ursprünglich für Baumwollfasern entwickelt wurde. Die Aufbereitung von Hanf oder Flachs für das Micronaire-Verfahren erfordert einen etwas größeren Aufwand als für Baumwolle, da Hanf und Flachs stärker zu Inhomogenitäten neigen als Baumwolle.

Die weitere Ausgestaltung der Erfindung ergibt sich aus den Merkmalen der Ansprüche 2 - 7.

Im Rahmen der Aufgabe liegt auch ein Verfahren zur Herstellung eines Schwammtuches auf Zellulosebasis der zuvor beschriebenen Art, mit einer Innenverstärkung aus Textilfasern. Hierzu werden bei dem erfindungsgemäßen Verfahren Fasern zusammen mit einer Viskoselösung und zumindest einem Porenbildner unter Mischen einem Kneter zugeführt, wobei der Füllgrad des Kneters 40 bis 70 % des Knetervolumens beträgt und die Viskose-Faser-Mischung wird sowohl in Längs- als in Querrichtung auf ein Transportband gleichmäßig aufgetragen und zu einer Schichtbahn geformt.

In Ausgestaltung des Verfahrens werden die Textilfasern vorbehandelt, durch verdünnte Natronlauge benetzt und danach auf einen Feuchtigkeitsgehalt kleiner/gleich 600 % des Trockengewichts abgepresst.

Die aus der Viskose-Faser-Mischung geformte Schichtbahn wird durch ein saures oder ein 80 bis 103 °C heißes alkalisches Koagulationsbad hindurch geführt und in diesem regeneriert, danach wird die regenerierte Schichtbahn gereinigt, getrocknet, auf die gewünschte Breite zugeschnitten und zu Schwammtüchern konfektioniert.

Das Einbringen und das homogene Verteilen der Fasern in die Schwammtuchmasse geschieht in der Weise, dass die benetzten Fasern einer Viskoselösung zudosiert und in die Viskoselösung eingemischt werden, z. B. mittels eines Förderbandes oder über eine Rutsche. Der Viskoselösung wird zumindest ein Porenbildner zugesetzt und mit eingeknetet. Eine optimale Verteilung der Textilfasern in der Mischung wird bei einem Füllgrad des Kneters zwischen 40 und 70 % des Knetervolumens erzielt. Dabei richtet sich der Füllgrad nach der Viskosität der Mischung. Mit steigender Viskosität der Mischung wird der Füllgrad des Kneters verringert. Die Homogenität der Verteilung der Fasern in der Mischung hängt auch von der Geometrie des Kneters ab, wobei die Seitenlänge der Mischorgane des Kneters so festgelegt wird, dass ein Auskämmen der Fasern während des Mischvorganges vermieden wird, da durch das Auskämmen der Fasern die Faserverteilung inhomogen wird.

Das Einbringen und homogene Verteilen der Fasern in der Schwammtuchmasse ist eine notwendige Bedingung, um eine verbesserte Reißfestigkeit sowohl in Längs- als auch in Querrichtung des aus der Schwammtuchmasse gefertigten Schwammtuches zu erreichen. Um die Reißfestigkeit in beiden Richtungen zu erhöhen, müssen die Textilfasern sowohl längs als auch quer gleichmäßig orientiert werden. Die Vororientierung der Fasern in Längsrichtung, d. h. in Transportbandlaufrichtung, erfolgt durch eine Düse, aus der die Schwammtuchmasse auf das Transportband als Schichtbahn aufgetragen wird. Die vorwiegende Längsorientierung der Fasern in der Schichtbahn geschieht durch

EP 1 729 623 B1

Verteilen der Schwammtuchmasse in Maschinenrichtung bzw. Laufrichtung des Transportbandes und Anpressen der Masse mittels einer schnell in Längsrichtung rotierenden Walze. Die vorwiegende Querorientierung der Fasern in der Mischung wird beispielsweise dadurch erreicht, dass die Düse drehbar ist und aus der Maschinenrichtung in die Querrichtung gedreht wird, um dann in dieser Position die Schwammtuchmasse als Schichtbahn auf dem Transportband aufzutragen, wobei auch in dieser Position noch eine geringe Längsorientierung durch das Anpressen der Masse mittels einer schnell in Längsrichtung rotierender Walze erreicht wird. In Abhängigkeit des Winkels der Düse zum Transportband lässt sich die vorwiegende Faserorientierung in hohem Maße längs oder quer einstellen.

Die Schichtbahn wird in einem sauren oder heißen alkalischen Koagulationsbad regeneriert, wobei die Temperatur des alkalischen Bades 80 bis 103 °C beträgt. Nach dem Verlassen des Koagulationsbades wird die Schichtbahn gereinigt, getrocknet, auf die gewünschte Breite geschnitten und zu Schwammtüchern konfektioniert.

Durch die homogene Verteilung der Textilfasern als innere Verstärkung des Schwammtuches, werden sowohl die Reißfestigkeit als auch die Abriebfestigkeit in Längs- bzw. Maschinenrichtung als auch in Querrichtung erhöht, ohne dass die Saugeigenschaften des Schwammtuches negativ beeinflusst werden. Durch die Orientierung der Fasern können gezielt Längs- und Querfestigkeit eingestellt werden.

Handelt es sich bei den Textilfasern um Baumwollfasern, so werden diese im Allgemeinen aus gepressten Baumwollballen erhalten. Die durch das Vorbehandeln der Baumwollballen gewonnenen Baumwollkämmlinge haben einen ausreichenden Feinheitsgrad, der im Übrigen auch Für Textilfasern aus Hanf und Flachs erforderlich ist. Diese Baumwollfasern bzw. Textilfasern werden durch ein Benetzungsbad aus verdünnter Natronlauge hindurchgeführt. Am Auslauf des Benetzungsbades werden die Fasern auf einen Feuchtigkeitsgehalt kleiner/gleich 600 % des Trockengewichts der Fasern abgepresst.

Die Schwammtücher gemäß der Erfindung haben gegenüber Schwammtüchern, die eine innere Verstärkung durch ein Netz besitzen, eine erhöhte Abriebfestigkeit sowohl in Längs- als auch in Querrichtung und über die Fasermenge und -orientierung wird die Reißkraft in Längs- und Querrichtung eingestellt.

## Patentansprüche

1. Schwammtuch auf Basis von regenerierter Zellulose mit einer Innenverstärkung aus Textilfasern, **dadurch gekennzeichnet, dass** die Faserfeinheit in Micronaire 3 bis 6 beträgt, dass die Länge der Stapelfasern im Bereich von 12 bis 30 mm liegt, dass die Textilfasern aus Baumwolle, Hanf oder Flachs bestehen und dass das Verhältnis Stapelfaserlänge SL 2,5 % in mm zu Faserfeinheit in Micronaire im Bereich 4,0 bis 7,5 liegt.

2. Schwammtuch nach Anspruch 1, **dadurch gekennzeichnet, dass** das Verhältnis Stapelfaserlänge SL 2,5 % in mm zu Faserfeinheit 4,5 bis 7,0 beträgt.

3. Schwammtuch nach Anspruch 1, **dadurch gekennzeichnet, dass** die Textilfasern in der Zellulose des Schwammtuches räumlich homogen verteilt sind.

4. Schwammtuch nach Anspruch 1, **dadurch gekennzeichnet, dass** die Textilfasern vorbehandelt und gleichmäßig mit verdünnter Natronlauge benetzt sind.

5. Schwammtuch nach Anspruch 4, **dadurch gekennzeichnet, dass** die Textilfasern einen ausreichenden Feinheitsgrad vor dem Benetzen aufweisen.

6. Schwammtuch nach Anspruch 1, **dadurch gekennzeichnet, dass** die Baumwollfasern Baumwollkämmlinge sind.

7. Schwammtuch nach Anspruch 4, **dadurch gekennzeichnet, dass** die benetzten Textilfasern in eine Viskoselösung einknetbar und homogen verteilbar sind.

8. Verfahren zur Herstellung eines Schwammtuches auf Basis von regenerierter Zellulose mit einer Innenverstärkung aus Textilfasern gemäß einem oder mehreren der Ansprüche 1 bis 7, **dadurch gekennzeichnet, dass** Textilfasern zusammen mit einer Viskoselösung und zumindest einem Porenbildner unter Mischen einem Kneter zugeführt werden, dass der Füllgrad des Kneters 40 bis 70 % des Knetervolumens beträgt und dass die Viskose-Textilfaser-Mischung sowohl in Längs- als auch in Querrichtung auf ein Transportband gleichmäßig aufgetragen und zu einer Schichtbahn geformt wird.

9. Verfahren nach Anspruch 8, **dadurch gekennzeichnet, dass** die Textilfasern vorbehandeln, durch verdünnte Natronlauge benetzt und danach auf einen Feuchtigkeitsgehalt kleiner/gleich 600 % des Trockengewichts des Textilfaservileses abgepresst werden.

10. Verfahren nach Anspruch 8, **dadurch gekennzeichnet, dass** die Schichtbahn durch ein saures oder ein 80 bis 103 °C heißes alkalisches Koagulationsbad hindurch geführt und in diesem regeneriert wird, dass die regenerierte Schichtbahn gerelnigt, getrocknet, auf die gewünschte Breite zugeschnitten und zu Schwammtüchern konfektioniert wird.

**Claims**

1. A sponge cloth based on regenerated cellulose and having an internal enforcement comprising textile fibers, wherein the Micronaire fiber fineness is in the range from 3 to 6, the length of the staple fibers is in the range from 12 to 30 mm, the textile fibers consist of cotton, hemp or flax and the ratio of staple fiber length SL 2.5 % in mm to Micronaire fiber fineness is in the range from 4.0 to 7.5.

2. The sponge cloth as claimed in claim 1, wherein the ratio of staple fiber length SL 2.5 % in mm to fiber fineness is in the range from 4.5 to 7.0.

3. The sponge cloth as claimed in claim 1, wherein the textile fibers form a spatially homogeneous distribution in the cellulose of the sponge cloth.

4. The sponge cloth as claimed in claim 1, wherein the textile fibers are pretreated and uniformly wetted with dilute aqueous sodium hydroxide solution.

5. The sponge cloth as claimed in claim 4, wherein the textile fibers have a sufficient degree of fineness before wetting.

6. The sponge cloth as claimed in claim 1, wherein the cotton fibers are cotton noils.

7. The sponge cloth as claimed in claim 4, wherein the wetted textile fibers are kneadable and homogeneously dispersible into a viscose solution.

8. A process for producing a sponge cloth based on regenerated cellulose and having an internal enforcement comprising textile fibers as claimed in one or more of claims 1 to 7, wherein textile fibers are fed to a kneader together with a viscose solution and at least one pore-former by mixing, the fillage of the kneader is 40 to 70 % of the kneader volume, and the viscose/textile fiber mixture is uniformly applied to a transporter belt not only in the longitudinal direction but also in the transverse direction and formed into a web.

9. The process as claimed in claim 8, wherein the textile fibers are pretreated, wetted with dilute aqueous sodium hydroxide solution and thereafter pressed off down to a moisture content amounting to not more than 600 % of the dry weight of the textile fiber web.

10. The process as claimed in claim 8, wherein the web is led through an acidic or an 80 to 103 °C alkaline coagulation bath and is regenerated therein, the regenerated web is cleaned, dried, cut to the desired width and end-itemed into sponge cloths.

**Revendications**

1. Tissu-éponge à base de cellulose régénérée avec un renforcement interne en fibres textiles, **caractérisé en ce que** la valeur micronaire de la finesse des fibres est de 3 à 6, **en ce que** la longueur des fibres discontinues se situe dans la plage de 12 à 30 mm, **en ce que** les fibres textiles sont constituées de coton, de chanvre ou de lin et **en ce que** le rapport de la longueur des fibres discontinues de type SL 2, 5 % en mm à la finesse des fibres en valeur micronaire se situe dans la plage de 4,0 à 7,5.

2. Tissu-éponge selon la revendication 1, **caractérisé en ce que** le rapport de la longueur des fibres discontinues de type SL 2,5 % en mm à la finesse des fibres est de 4,5 à 7,0.

3. Tissu-éponge selon la revendication 1, **caractérisé en ce que** les fibres textiles de la cellulose du tissu-éponge ont une distribution spatiale homogène.

4. Tissu-éponge selon la revendication 1, **caractérisé en ce que** les fibres textiles sont pré-traitées et arrosées uniformément de lessive sodique diluée.

5. Tissu-éponge selon la revendication 4, **caractérisé en ce que** les fibres textiles présentent un degré de finesse suffisant avant l'arrosage.

6. Tissu-éponge selon la revendication 1, **caractérisé en ce que** les fibres de coton sont de la freinte de coton.

7. Tissu-éponge selon la revendication 4, **caractérisé en ce que** les fibres textiles arrosées peuvent être malaxées dans une solution de viscose et distribuées de manière homogène.

8. Procédé de fabrication d'un Tissu-éponge à base de cellulose régénérée avec un renforcement interne en fibres textiles selon l'une quelconque ou plusieurs des revendications 1 à 7, **caractérisé en ce que** des fibres textiles sont acheminées conjointement avec une solution de viscose et au moins un agent porogène tout en mélangeant à un malaxeur, **en ce que** le degré de remplissage du malaxeur est de 40 à 70 % du volume du malaxeur et **en ce que** le mélange de viscose et de fibres textiles est appliqué uniformément autant dans la direction longitudinale que dans la direction transversale sur une bande de transport et conformé en lé stratifié.

9. Procédé selon la revendication 8, **caractérisé en ce que** les fibres textiles sont pré-traitées, arrosées de lessive sodique diluée et ensuite pressées à une teneur en humidité inférieure ou égale à 600 % du poids sec du non-tissé de fibres textiles.

10. Procédé selon la revendication 8, **caractérisé en ce que** le lé stratifié est envoyé à travers un bain de coagulation acide ou un bain de coagulation alcalin chauffé à une température de 80 à 103 °C et régénéré dans celui-ci, **en ce que** le lé stratifié régénéré est lavé, séché, coupé à la largeur souhaitée et présenté sous forme de tissus-éponges.